# EUROPÄISCHE PATENTANMELDUNG

(11) **EP 3 073 427 A1**
(43) Veröffentlichungstag der Anmeldung: **28.09.2016**
(21) Anmeldenummer: 15161546.5
(22) Anmeldetag: 27.03.2015
(51) Int. Cl.: G06Q 10/10

(54) **Informationsbereitstellung mittels eines whiteboards**

(71) Anmelder: Deutsche Telekom AG, 53113 Bonn (DE)
(72) Erfinder: Scheerbarth, Thomas, 12555 Berlin (DE); Lange, Christoph, 10318 Berlin (DE)
(74) Vertreter: Brandt & Nern Patentanwälte

(57) **Zusammenfassung**

Die Erfindung betrifft ein Whiteboard, mit einer handbeschreibbaren elektronischen Tafel (1) und mit einer Computereinrichtung (2) zur Bereitstellung an der Tafel (1) wiedergegebener Informationen für computerbasierte Endgeräte (3₁ - 3ₙ, 4₁ - 4ₙ, 5₁ - 5ₙ, 6₁ - 6ₙ). In die Computereinrichtung (2) des Whiteboards sind ein Semantikmodul (7), ein Verwaltungsmodul (8) zur Verwaltung sich bei der Computereinrichtung (2) unter Angabe der auf ihnen ausführbaren Applikationen registrierender Endgeräte (3₁ - 3ₙ, 4₁ - 4ₙ, 5₁ - 5ₙ, 6₁ - 6ₙ) und ein Auslieferungsmodul (9) derart implementiert, dass durch die elektronische Tafel (1) an die Computereinrichtung (2) übertragene Informationen mittels des Semantikmoduls (7) kategorisiert und bei bestehender Verbindung zwischen der Computereinrichtung (2) und einem bei ihr registrierten Endgerät (3₁ - 3ₙ, 4₁ - 4ₙ, 5₁ - 5ₙ, 6₁ - 6ₙ) mittels des Auslieferungsmoduls (9) jeweils entsprechend ihrer Kategorie unmittelbar an diese Informationen bei ihrer Ausführung verwendende Applikationen übergeben werden.

## Beschreibung

Die Erfindung betrifft eine Lösung zur Bereitstellung von Informationen mit Hilfe eines intelligenten Whiteboards. Sie bezieht sich auf die unmittelbare Wiedergabe von Informationen an einer elektronischen Tafel und auf die Bereitstellung der an der Tafel wiedergegebenen Informationen für computerbasierte Endgeräte, das heißt insbesondere, aber nicht ausschließlich, für mobile Endgeräte, wie Smartphones und Tablet-PCs oder Notebooks, zum Zwecke ihrer Nutzung mittels dieser Endgeräte. Gegenstände der Erfindung sind dabei ein entsprechendes Whiteboard und ein die Abläufe bei der Bereitstellung von Informationen mittels eines solchen Whiteboards beschreibendes Verfahren.

In privaten und geschäftlichen Umgebungen werden in vielen Fällen Tafeln, Pinnwände und Whiteboards benutzt, um Informationen zu erarbeiten, zu verteilen und bekanntzumachen. Beispielsweise können diese für geschäftliche Besprechungen genauso wie zur Informationsbekanntgabe in Mehrfamilienhäusern oder in Familienwohnungen eingesetzt werden. Um eine bessere Wahrnehmung der Informationen und eine schnellere Erfassung des durch sie transportierten Inhalts zu ermöglichen werden diese häufig in der Weise aufbereitet, dass sie kategorisiert dargestellt werden. Die Kategorien können in Abhängigkeit vom jeweiligen Anwendungsfeld (zum Beispiel einerseits geschäftlich oder andererseits privat) sehr unterschiedlich sein. Unabhängig davon ist aber das Prinzip ihrer Darstellung beziehungsweise Wiedergabe mit Hilfe der vorgenannten Mittel sehr ähnlich. Beispielsweise können Informationen nach Kalenderinformationen (Zeit), Lokalitätsinformation (Ort), allgemeinen Notizen und spezifischen Inhalten unterschieden und entsprechend sortiert beziehungsweise kategorisiert dargestellt werden. Informationen und die sie vermittelnden Inhalte werden in dieser Weise zum Beispiel in Schaukästen oder an klassischen Whiteboards dargestellt. Modernere Ausführungsformen von Whiteboards können auch über eine Funktion zum Ausdrucken von Informationsinhalten oder zu deren Speicherung auf internen oder externen Speichermedien verfügen.

Werden klassische Whiteboards zum Beispiel in geschäftlichen Umgebungen verwendet, ist es derzeit noch gebräuchlich die erarbeiteten Darstellungen und Text abzufotografieren und manuell in elektronische Dokumente zu übertragen. Jedoch besteht der Wunsch dies zu verbessern und zu automatisieren, um beispielsweise die Texte und Zeichnungen direkt vom Whiteboard in eine maschinenlesbare Form zu überführen. Daher sind Lösungen bekannt geworden, die es gestatten, das auf dem Whiteboard Geschriebene und Gezeichnete direkt auszudrucken oder über Netze an dafür bestimmte Rechner oder Server in der Cloud, das heißt vorzugsweise im Internet zu übertragen. Bei derartigen Lösungen, wie sie beispielsweise durch die US 2014/0165152 A1 beschrieben werden, steht im Vordergrund die bloße Übertragung der augenblicklich auf dem entsprechenden Whiteboard wiedergegebenen Inhalte an die Cloud, in der sie gespeichert werden. Eine irgendwie geartete Analyse der betreffenden Inhalte findet dabei nicht statt.

Aufgabe der Erfindung ist es, eine gegenüber dem Stand der Technik komfortablere Informationsvermittlung mittels eines entsprechend ausgebildeten Whiteboards zu ermöglichen, welche auch eine qualifizierte Weitergabe an dem Whiteboard dargebotener Informationen unter Berücksichtigung ihrer jeweiligen konkreten Inhalte an andere elektronische Endgeräte ermöglicht. Hierzu sind ein entsprechendes Whiteboard zu schaffen und ein dies unter Verwendung des Whiteboards ermöglichendes Verfahren anzugeben.

Die Aufgabe wird durch ein Whiteboard mit den Merkmalen des Patentanspruchs 1 gelöst. Ein die Aufgabe lösendes Verfahren ist durch den ersten Verfahrensanspruch charakterisiert. Vorteilhafte Aus- beziehungsweise Weiterbildungen der Erfindung sind durch die jeweiligen Unteransprüche gegeben.

Bei dem die Aufgabe lösenden intelligenten Whiteboard handelt es sich um ein Whiteboard mit einer elektronischen Tafel und mit einer Computereinrichtung. Die elektronische, zumindest der visuellen Wiedergabe von Informationen dienende Tafel ist handbeschreibbar ausgebildet. An der elektronischen Tafel wiedergegebene Informationen werden dabei durch die vorgenannte Computereinrichtung für computerbasierte, sich mit der Computereinrichtung des Whiteboards verbindende Endgeräte zur Nutzung mittels dieser Endgeräte bereitgestellt.

Erfindungsgemäß sind in die Computereinrichtung ein Semantikmodul zur semantischen Analyse von Informationen, ein Verwaltungsmodul und ein Auslieferungsmodul implementiert. Durch das Verwaltungsmodul werden zumindest die Endgeräte verwaltet, welche zur Nutzung der auf dem Whiteboard beziehungsweise an dessen elektronischer Tafel wiedergegebenen Informationen aufgrund einer zuvor erfolgenden Registrierung berechtigt sind. Dabei werden im Zuge der Registrierung der Endgeräte die auf diesen ausführbaren Applikationen erfasst und in dem Verwaltungsmodul vermerkt.

Die vorgenannten Module sind in die Computereinrichtung derart implementiert, dass durch die elektronische Tafel an die Computereinrichtung übertragene Informationen mittels des Semantikmoduls kategorisiert und bei bestehender Verbindung zwischen der Computereinrichtung und einem bei ihr registrierten Endgerät mittels des Auslieferungsmoduls - im Weiteren auch als Delivery Manager bezeichnet - jeweils entsprechend ihrer Kategorie unmittelbar an die auf diesem Endgerät ansprechbaren, die jeweilige Kategorie von Informationen bei ihrer Ausführung verwendenden Applikationen übergeben werden. Was die Ansprechbarkeit von Applikationen anbelangt, so bezieht sich dies auf deren gemäß Eintrag im Verwaltungsmodul grundsätzliches Vorhandensein auf einem betreffenden Endgerät und gegebenenfalls darüber hinaus auf eine für die jeweilige Applikation in Zuordnung zum Endgerät in dem Verwaltungsmodul vermerkte Berechtigung zur Nutzung von auf dem Whiteboard wiedergegebenen Information. Die Übergabe der kategorisierten Informationen an die sie bei ihrer Ausführung verwendenden Applikationen erfolgt über Programmierschnittstellen der Applikationen, das heißt über API's (API = Applikation Programming Interface) auf der Basis eines entsprechenden Eintrags in dem Verwaltungsmodul der Computereinrichtung, durch welchen eine jeweilige Applikation als eine auf dem betreffenden Endgerät ansprechbare Applikation bezeichnet ist.

Demnach wirken die in die Computereinrichtung des Whiteboards implementierten Module derart zusammen, dass zum Beispiel Informationen, welche auf der elektronischen Tafel des Whiteboards handschriftlich niedergelegt und somit unmittelbar durch die elektronische Tafel wiedergegeben werden, nach ihrer Übermittlung an die Computereinrichtung und entsprechender Analyse und Kategorisierung der Kategorie Kalender zugeordnet werden, sofern im Zuge der semantischen Analyse festgestellt wird, dass die betreffenden Informationen Bezug auf ein Datum oder auf einen Termin nehmen. Sofern dann ein bei dem Whiteboard beziehungsweise dessen Computereinrichtung registriertes Endgerät aufgrund entsprechender Berechtigung eine Verbindung mit der Computereinrichtung aufbaut, wird diese Information, sofern vorhanden und damit auf dem betreffenden Endgerät ansprechbar, durch das Auslieferungsmodul der Computereinrichtung unmittelbar an eine Kalender-Applikation (App) dieses Endgeräts, das heißt an das API dieser Applikation übergeben. Selbstverständlich kann die unmittelbare Übertragung der Information an eine sie bei ihrer Verarbeitung auf dem Endgerät verwendende App und damit die gewissermaßen zwischen dieser App und dem Whiteboard erfolgende Synchronisation vorzugsweise neben dem Bestehen einer Verbindung zwischen der Computereinrichtung des Whiteboards und dem betreffenden Endgerät noch daran gebunden sein, dass durch den Nutzer des Endgeräts die Ausführung eines entsprechenden Befehls aufgrund einer dafür vorgesehenen Bedienhandlung veranlasst wird.

In ähnlicher Weise werden entsprechende Informationen durch die Computereinrichtung beispielsweise an eine Notiz-Applikation (Memo-App) eines sich mit der Computereinrichtung des Whiteboards verbindenden elektronischen Endgeräts übergeben. Die betreffenden Informationen stehen dann der jeweiligen Applikation beziehungsweise App eines Endgeräts bei ihrer Ausführung unmittelbar für einen Zugriff zur Verfügung. Demnach wird beispielsweise durch die Kalender-App eines Smartphones oder eines Tablet-PCs ein handschriftlich auf der elektronischen Tafel des Whiteboards niedergelegter Termin aufgrund einer im Zuge einer Verbindung mit der Computereinrichtung des Whiteboards erfolgenden Übernahme dieser Information dem Nutzer dieses Endgeräts unmittelbar angezeigt.

Vorzugsweise werden in der Computereinrichtung nicht nur Endgeräte verwaltet, für welche die an der Tafel des Whiteboards wiedergegebenen Informationen bereitgestellt werden, sondern auch die Nutzer dieser Endgeräte. Gemäß einer entsprechenden Ausbildungsform verfügt das Whiteboard dazu außerdem über eine Nutzerverwaltung, welche als ein eigenständiges Modul oder, vorzugsweise, als Bestandteil des die Endgeräte verwaltenden Verwaltungsmoduls ausgebildet ist. Bei einer solchen Ausbildungsform werden die Nutzer vorzugsweise in Zuordnung zu den von ihnen verwendeten, bei der Computereinrichtung beziehungsweise deren Verwaltungsmodul registrierten Endgeräten verwaltet. Hierdurch ist es möglich, an dem Whiteboard wiedergegebene Informationen nutzerselektiv an sich mit der Computereinrichtung verbindende Endgeräte weiterzuleiten, also festzulegen welche Art von Informationen an ein oder mehrere Endgeräte welches Nutzers weitergeleitet werden. Dies kann vorzugsweise zusätzlich dadurch abgesichert werden, dass bei dem Whiteboard registrierte Nutzer sich jeweils im Rahmen der Verbindung eines ihrer Endgeräte mit der Computereinrichtung des Whiteboards gegenüber dem Whiteboard authentifizieren müssen.

In einer bevorzugten Ausbildungsform der Erfindung weist die Computereinrichtung neben den eingangs genannten Modulen einen Annotationsspeicher auf, in welchem die von dem Semantikmodul kategorisierten Informationen unter Zuordnung zumindest der für sie jeweils festgelegten Kategorie zum Zweck eines späteren Auslesens durch das Auslieferungsmodul abgelegt werden. Die von dem Semantikmodul kategorisierten Informationen werden bei dieser Ausbildungsform entweder durch das Auslieferungsmodul direkt vom Semantikmodul zu mit der Computereinrichtung verbundenen Endgeräten weitergeleitet oder durch das Auslieferungsmodul aus dem Annotationsspeicher ausgelesen und entsprechend ihrer Kategorie unmittelbar an Applikationen eines mit der Computereinrichtung verbundenen Endgerätes übergeben. Vorzugsweise wird zudem in dem Annotationsspeicher neben der Kategorie einer Information beziehungsweise eines kategoriebedingten Kennzeichens zur Art der Anwendung (App), mit welcher eine Information nutzbar ist, noch ein Datum dazu vermerkt, wann die betreffende Information an der elektronischen Tafel wiedergegeben beziehungsweise präsentiert wurde. Dabei bleiben zu einem früheren Zeitpunkt über die elektronische Tafel wiedergegebene Inhalte über eine längere Zeit zumindest als kategorisierte Informationen in dem Annotationsspeicher der Computereinrichtung gespeichert. Hierdurch ist es - vorzugsweise aber nur berechtigten - Nutzern mit Hilfe ihrer Endgeräte möglich, unter einem jeweiligen Datum auch auf früher präsentierte beziehungsweise "historische" Inhalte zuzugreifen oder an der Tafel des Whiteboards einen früheren Inhalt wiederherzustellen.

Was die Frage der Art von durch die Tafel des Whiteboards wiedergegebenen Informationen anbelangt, so ist diese nicht auf handgeschriebene Textinformationen oder auf per Hand an der Tafel des Whiteboards angefertigte Zeichnungen beschränkt. Vielmehr sind von der Erfindung auch die Ausgabe und Bereitstellung von Informationen in Form medialer Daten, also die Ausgabe visueller und akustischer Informationen, umfasst. Demnach erstreckt sich die Analysefunktion der in die Computereinrichtung des Whiteboards implementierten Softwareanwendung zur semantischen Analyse auf den gesamten Inhalt des Whiteboards, bei dem es sich zum Beispiel um Text, Audionachrichten, Bilder oder Videomaterial handeln kann. Diese Inhalte können unter verschiedenen Gesichtspunkten interpretiert und kategorisiert werden. Diese sind zum Beispiel die Interpretation nach Content-Art (Bild, Audio-Sprachnachricht, Text, Videonachricht) und nach Content-Themen. Content-Themen umfassen beispielsweise Termine, Erinnerungen, Hinweise und Notizen.

Nachdem die Whiteboard-Inhalte analysiert und kategorisiert worden sind, werden die entsprechenden Informationen durch das Auslieferungsmodul beziehungsweise den Delivery Manager an alle bei der Computereinrichtung dafür registrierten Endgeräte oder nur an ausgewählten Empfängern zugeordnete Endgeräte übertragen, sobald diese sich mit der Computereinrichtung des Whiteboards verbinden. Die Übertragung erfolgt in dem Sinne, dass die Informationen entsprechend ihrer Kategorie und damit entsprechend ihrer thematischen Zuordnung an die auf einem jeweiligen Endgerät gehaltenen Applikationen übertragen werden. Dies bedeutet beispielsweise, dass an die Computereinrichtung des Whiteboards übertragenen Informationen an entsprechenden Kalender-Applikationen (Kalender-Apps) registrierter Endgeräte übergeben werden, sofern die semantische Interpretation des Whiteboard-Inhaltes ergeben hat, dass es sich bei diesen Informationen um Termine handelt. Danach befinden sich die beispielsweise handschriftlich an die Tafel des Whiteboards geschriebenen Termine direkt im Smartphone, in dem PC oder auf dem Tablet des Nutzers und können mit einer entsprechenden Benachrichtigungsfunktion gekoppelt werden.

Erkennt das Modul für die semantische Analyse (Semantikmodul) der an die Computereinrichtung übermittelten Informationen zum Beispiel eine Aufforderung, welche durch bestimmte Wörter oder Wortkombinationen beschrieben werden kann, werden daraus Erinnerungsfunktionen abgeleitet, welche dann als solche an die als Empfänger ausgewählten Endgeräte übertragen und an die sie bei ihrer Ausführung verwendenden Applikationen übergeben werden. Das Semantikmodul ist außerdem in der Lage Inhalte von Sprachnachrichten zu analysieren und darin enthaltene Informationen zu extrahieren sowie zu kategorisieren. Hierbei ist Bestandteil des Whiteboards, vorzugsweise des Semantikmoduls seiner Computereinrichtung, ein integriertes Sprache-zu-Text-Modul, welches die Sprachnachricht in einen Text umwandelt. Dieser wird dann entsprechend analysiert und an die dafür vorgesehene Applikation des Endgerätes (Kalender, Notizfunktion und dergleichen) übertragen.

In einem unmittelbaren Zusammenhang damit steht die Frage, in welcher Weise entsprechende Informationen auf das Whiteboard beziehungsweise dessen elektronische Tafel gelangen. Im Hinblick auf die schon erwähnten akustischen Informationen, kann das Whiteboard beziehungsweise dessen elektronische Tafel mit einem Mikrofon ausgestattet sein, über welches akustische Informationen, wie beispielsweise Sprachnotizen, auf das Whiteboard übertragen werden. Entsprechende akustische Notizen können dabei unmittelbar durch ebenfalls an der Tafel vorgesehene Lautsprecher ausgegeben und beispielsweise aufgrund der gleichzeitigen Betätigung eines entsprechenden Bedienelements als Voice-Memo an dessen Computereinrichtung übertragen werden. Hier werden sie dann, dem Prinzip der Erfindung folgend, der Kategorie Voice-Memo zugeordnet und können in dieser Form an entsprechende Applikationen sich mit der Computereinrichtung des Whiteboards verbindender Endgeräte übergeben werden. Darüber hinaus kann es aber vorgesehen sein, dass das Whiteboard, entweder als Bestandteil der schon mehrfach angesprochenen Computereinrichtung oder in Form einer integralen Einheit der elektronischen Tafel, über eine Sprachverarbeitung verfügt, welche eine mittels des Mikrofons entgegengenommene akustische Information unmittelbar in alternativ oder kumulativ zur akustischen Ausgabe auf der Tafel auszugebenden und zur Kategorisierung an das Semantikmodul zu übergebenden Text umwandelt. Das heißt, dass eine akustische Eingabe gegebenenfalls an Endgeräte, welche sich mit der Computereinrichtung des Whiteboards verbinden beziehungsweise an entsprechende Applikationen dieser Endgeräte, sowohl als Voice-Memo als auch als Textnotiz übergeben werden können.

Die Nutzung durch das Whiteboard bereitgestellter Informationen mittels entsprechender Endgeräte ist, wie bereits ausgeführt, an eine zuvor erfolgende Registrierung der Endgeräte und vorzugsweise darüber hinaus auch ihrer Nutzer bei der Computereinrichtung des Whiteboards gebunden. Hierbei ist beispielsweise das Verwaltungsmodul der Computereinrichtung so ausgebildet, dass durch dieses eine kombinierte Nutzer- und Geräteverwaltung realisiert ist. Eine entsprechende Nutzer- und Geräteverwaltung ist dabei vorzugsweise so ausgestaltet, dass sich mittels dieser verschiedene Nutzer mit unterschiedlichen Geräten an dem System - genauer gesagt, an der Computereinrichtung des Whiteboards-anmelden können, wobei die Nutzer und ihre zur Interaktion mit dem Whiteboard verwendbaren Endgeräte mit Hilfe einer zu der Nutzer- und Geräteverwaltung gehörenden Administrationsfunktion verwaltet werden können. Das Verwaltungsmodul übernimmt dabei die Registrierung der Endgeräte, die Nutzerzuordnung (Zuordnung den Endgeräte zu bestimmten Nutzern) und das Einordnen der auf den jeweiligen Endgeräten vorhandenen Applikationen.

Im Falle der bevorzugten Ausbildung des Whiteboards mit einer Nutzerverwaltung muss sich der Nutzer eines Endgerätes zur Übernahme von durch das Whiteboard beziehungsweise durch seine Computereinrichtung bereitgestellten Informationen auf sein Endgerät, wie bereits ausgeführt, vorzugsweise gegenüber dem Whiteboard authentifizieren. Dies kann in an sich bekannter Weise durch Eingabe einer Nutzerkennung und eines Passworts geschehen. Die Übermittlung der Informationen von der elektronischen Tafel des Whiteboards an seine Computereinrichtung ist vorzugsweise an eine Betätigung eines entsprechenden Bedienelements an der elektronischen Tafel gebunden. Denkbar ist es aber auch, dass über die Tafel ausgegebene Informationen unmittelbar im Zusammenhang mit ihrer Ausgabe, das heißt beispielsweise bei einer Ausgabe infolge handschriftlicher Notiz auf der Tafel in Echtzeit, an die Computereinrichtung übergeben werden.

Im Hinblick auf die zuvor angesprochenen Möglichkeiten, in welcher Weise über die elektronische Tafel auszugebende Informationen dem Whiteboard zugeführt werden, ist es erfindungsgemäß vorzugsweise weiterhin vorgesehen, dass das Whiteboard gewissermaßen über eine Art Rückkanal verfügt. Dabei ist dieses dazu ausgebildet, Informationen, wie Text, Graphiken, akustische Daten oder Videos, von dazu berechtigten, sich mit der Computereinrichtung verbindenden elektronischen Geräten entgegenzunehmen und sie der elektronischen Tafel zur Wiedergabe zuzuführen. Hiervon unberührt ist die Möglichkeit, dass Informationen dem Whiteboard lokal, das heißt unmittelbar an dessen elektronischer Tafel außer durch handschriftliches Beschreiben der Tafel vorzugsweise mit Hilfe von über lokale Schnittstellen (einschließlich Funkschnittstellen) mit der Tafel verbindbaren mobilen Endgeräten oder speziellen Eingabegeräten in elektronischer Form zugeführt werden können.

Wie bereits ausgeführt, können an der elektronischen Tafel des Whiteboards wiedergegebene Informationen generell an alle zur Verbindung mit dessen Computereinrichtung berechtigte Endgeräte von Nutzern oder nur an die Endgeräte ausgewählter Nutzer übermittelt werden. Soweit die Übermittlung der Informationen an Endgeräte ausgewählter Nutzer (nach deren Verbindung mit der Computereinrichtung und gegebenenfalls aufgrund durch den Nutzer veranlasster Ausführung eines entsprechenden Befehls durch das Endgerät) erfolgt, kann dabei beispielsweise in der schon angesprochenen Nutzer- und Geräteverwaltung festgelegt werden welche Information oder welche Kategorie von Informationen an welchen Nutzer und gegebenenfalls an welches Endgerät eines betreffenden Nutzers übertragen werden. Zur Auswahl eines Nutzers an dessen Endgerät oder Endgeräte eine Information übertragen wird, kann es vorgesehen sein, dass eine solche Auswahl mittels mindestens eines Bedienelementes der elektronischen Tafel getroffen werden kann.

In einer bevorzugten Ausbildung des erfindungsgemäßen Whiteboards ist dessen Computereinrichtung mit dem darin implementierten Semantikmodul und den anderen Modulen als eine räumlich von der elektronischen Tafel abgesetzte Einrichtung ausgebildet, welche zumindest temporär über ein Netzwerk mit der elektronischen Tafel verbunden ist. Besonders bevorzugt ist dabei eine Ausbildung der Computereinrichtung als Teil eines im Internet realisierten Cloudsystems, mit welchem die elektronische Tafel vorzugsweise ständig, aber zumindest nahezu ständig verbunden ist. Die elektronische Tafel ist zu diesem Zweck mit einer integrierten Internetzugangseinrichtung ausgestattet oder mit einer solchen Zugangseinrichtung über eine von ihr aufgenommene Netzwerkkarte verbindbar. Die elektronische Tafel kann zudem transportabel ausgebildet sein.

Im Hinblick auf die Beschreibbarkeit der elektronischen Tafel handelt es sich bei dieser vorzugsweise um ein handbeschreibbares elektronisches Display, welches sich gegebenenfalls über die gesamte Sichtfläche der elektronischen Tafel erstreckt. Denkbar, aber nicht bevorzugt, ist es abweichend davon, dass nur spezielle Teilbereiche der Sichtfläche der elektronischen Tafel handbeschreibbar ausgebildet sind. In jedem Falle ist es aber so, dass auf der Tafel erfolgende handschriftliche Notizen durch geeignete Auswertemittel der elektronischen Tafel entweder als graphische Darstellung oder auf der Basis einer Schrifterkennung als Text erfasst und digitalisiert sowie an die Computereinrichtung übertragen werden. Im Falle einer Ausbildung der beschreibbaren Bereiche der elektronischen Tafel als Display, handelt es sich insoweit bei dem betreffenden Display vorzugsweise um einen Touchscreen. Dabei ist die Beschreibbarkeit der Tafel beziehungsweise ihres Displays zumindest mit Hilfe spezieller Whiteboardstifte ermöglicht.

Nachfolgend soll anhand von Zeichnungen ein Ausführungsbeispiel für die Erfindung gegeben werden. Die zugehörigen Zeichnungen zeigen im Einzelnen:
- Fig. 1:: eine schematische Darstellung des intelligenten Whiteboards und seiner Interaktion mit verschiedenen mobilen Endgeräten eines Nutzers,
- Fig. 2:: das Whiteboard gemäß der Fig. 1 in Interaktion mit unterschiedlichen Endgeräten mehrerer Nutzer,
- Fig. 3:: die kategoriebasierte Übergabe von Informationen an mobile Endgeräte unterschiedlicher Nutzer,
- Fig. 4:: die Übergabe kategorisierter Informationen an unterschiedliche Applikationen eines Endgeräts eines Nutzers,
- Fig. 5:: die Informationsübergabe gemäß Fig. 4 am Beispiel der Übergabe von Informationen an eine Notizapplikation,
- Fig. 6:: die Rückkanalfähigkeit des Whiteboards,
- Fig. 7:: die Übergabe kategorisierter Informationen vom Whiteboard an Kalender-Applikationen auf Geräten unterschiedlicher Nutzer in einem Firmenkontext,
- Fig. 8:: die thematische Zuordnung von auf der Tafel des Whiteboards ausgegebenen Informationen zu verschiedenen Nutzern beziehungsweise Nutzergruppen,
- Fig. 9:: die Einrichtung von Berechtigungen zur Nutzung des Whiteboards für unterschiedliche Endgeräte,
- Fig. 10:: ein Beispiel für die Verwaltung von Informationen über Endgeräte und Nutzer in dem Verwaltungsmodul des Whiteboards.

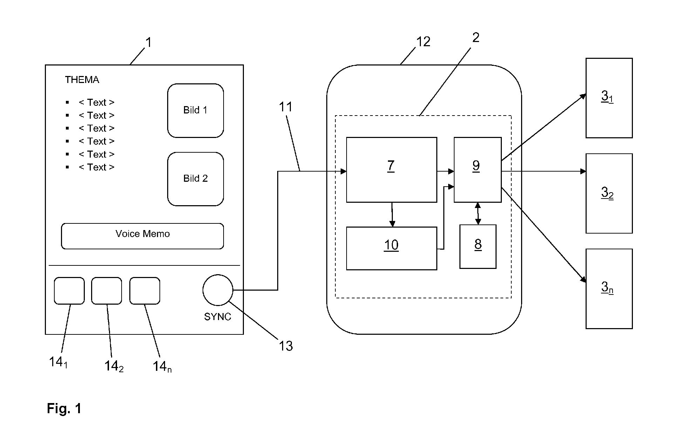

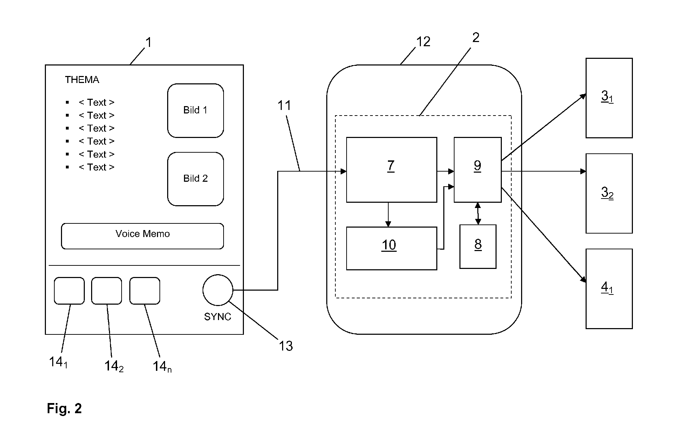

Fig. 1 und Fig. 2 zeigen das grundlegende Wirkungsprinzip der vorliegenden Erfindung: Auf dem intelligenten Whiteboard können verschiedene Informationen zur Wiedergabe über dessen elektronische Tafel 1 abgelegt werden. Dies sind zum Beispiel Text, Bilder, Sprach- oder Audio Nachrichten und Videos. Ein wesentliches Element der Erfindung ist eine semantische Analyse der Informationen mittels der vorzugsweise und gemäß dem gezeigten Beispiel cloudbasierten mit der Tafel 1 über ein Netzwerk 11 - wie das Internet - verbundenen Computereinrichtung 2, welche den Inhalt des Whiteboards beziehungsweise seiner Tafel 1 analysiert und dabei feststellt, ob es sich um eine Textnachricht, eine Sprach- oder Audionachricht, ein Video oder um Bilder handelt. Die semantische Analyse erfolgt dabei mittels des in die Computereinrichtung 2 in Form einer Softwareanwendung implementierten Semantikmoduls 7. Was die Computereinrichtung 2 anbelangt, so kann es sich bei dieser um einen einzelnen Computer (Server) oder um mehrere zur Erfüllung der vorstehend beschriebenen Funktionen miteinander interagierende Computer (Server) handeln.

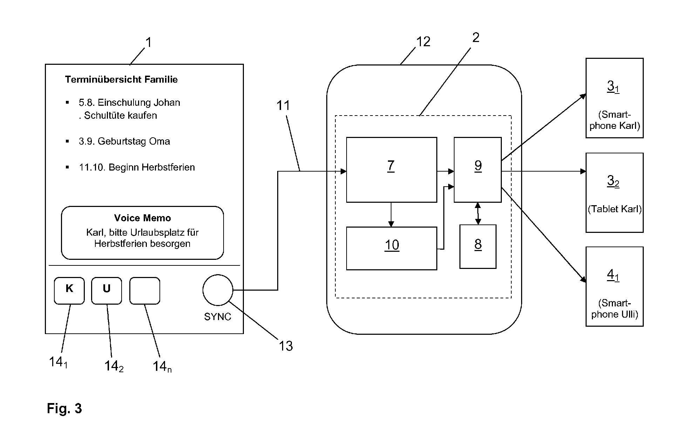

Die Fig. 3 skizziert die thematische Zuordnung des Whiteboard-Inhaltes zu als Empfänger angegebenen Nutzern. Zur Nutzung von Whiteboard-Inhalten berechtigte Nutzer werden dabei in einer Nutzerverwaltung der Computereinrichtung 2 verwaltet, welche in dem dargestellten Beispiel als integraler Bestandteil des auch zur Verwaltung der Endgeräte dienenden Verwaltungsmoduls 8 ausgebildet ist. In dem gezeigten Beispiel handelt es sich bei dem Whiteboard-Eintrag um Termine, welche durch das Semantikmodul 7 bei der intelligenten semantischen Analyse des Eintrags als solche erkannt werden. Über den Delivery Manager (das Auslieferungsmodul 9) werden diese Termine dann in die entsprechenden Applikationen, in diesem Fall an die Kalenderapplikation (Kalender-App), der entsprechenden Endgeräte 3₁, 3₂, 4₁ der Nutzer übertragen. Die Übertragung erfolgt hierbei über die offenen Programmierschnittstellen (API's) der jeweiligen Endgeräte-Applikationen (in diesem Fall über ein API der Kalenderapplikation).

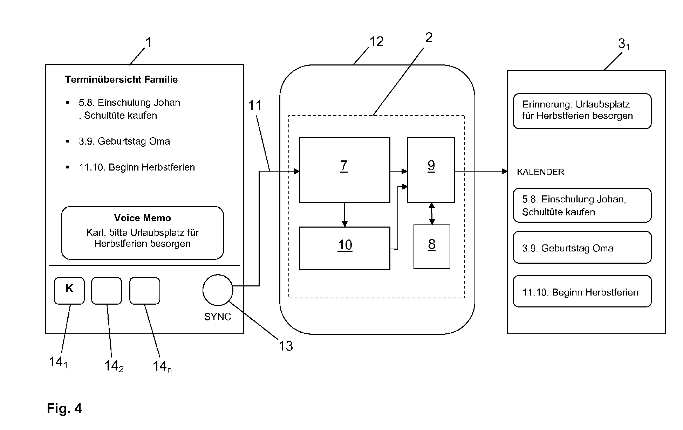

Die Fig. 4 zeigt wie die Computereinrichtung 2 die unterschiedlichen Inhalte des Whiteboards mittels des Semantikmoduls 7 im Wege einer intelligenten semantischen Analyse analysiert und wie das Auslieferungsmodul 9 die im Ergebnis dessen kategorisierten Informationen unmittelbar an unterschiedliche Applikationen auf Endgeräten (hier Endgerät 3₁) des Empfängers/Nutzers übergibt. Die unmittelbare Übergabe der kategorisierten Informationen an die Applikationen, gewissermaßen im Sinne eines Einschreibens der Informationen in ein API der jeweiligen Applikation, erfolgt dabei entweder im Wege ihrer direkten Weiterleitung vom Semantikmodul 7 an die Endgeräte (hier an das Endgerät 3₁) oder nach dem Auslesen der unter Zuordnung zu einer Kategorie in dem Annotationsspeicher 10 abgelegten Informationen aus dem Annotationsspeicher 10. Zum einen gibt es verschiedene als Text beschriebene Termine, welche in die Kalenderapplikation des Endgeräts 3₁ übergeben werden. Zum anderen gibt es eine Sprachnachricht, welche von der Analyseeinheit in Text umgewandelt wird und außerdem in dem Sinne analysiert wird, dass erkannt wird, dass es sich um eine Erinnerungsfunktion handelt. Diese wird dann an die dafür verfügbare Applikation (Erinnerungen) auf dem Endgerät 3₁ eines Empfängers/Nutzers übergeben.

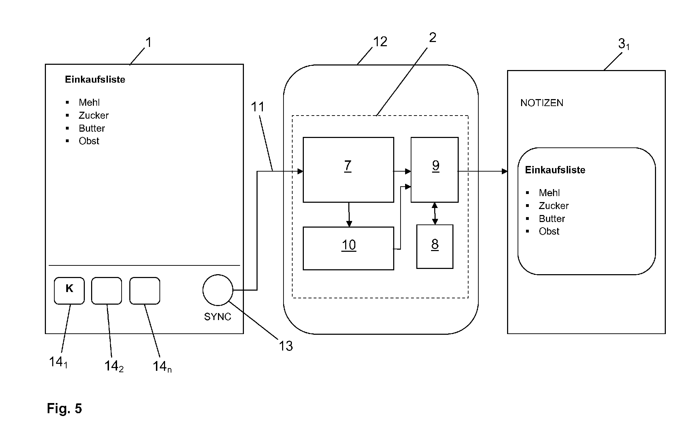

Die Fig. 5 veranschaulicht dieses Prinzip anhand einer Anwendung, welche Informationen in Form einer Einkaufsliste darstellt. Diese Einkaufsliste wird beim Betätigen der SYNC Taste an das die semantische Analyse durchführende Semantikmodul 7 der Computereinrichtung 2 übermittelt, welches erkennt, dass es sich um eine Einkaufsliste handelt und diese als solches einer Notizfunktion zugeordnet werden kann. Die Liste wird daraufhin durch das Auslieferungsmodul 9 an mindestens ein mit der Computereinrichtung 2 verbundenes Endgerät 3₁ des Empfängers/Nutzers (im Beispiel Karl) geschickt und hier entsprechend einem Eintrag im Verwaltungsmodul 8 über ein API an eine Notizapplikation (Notiz-App) übergeben.

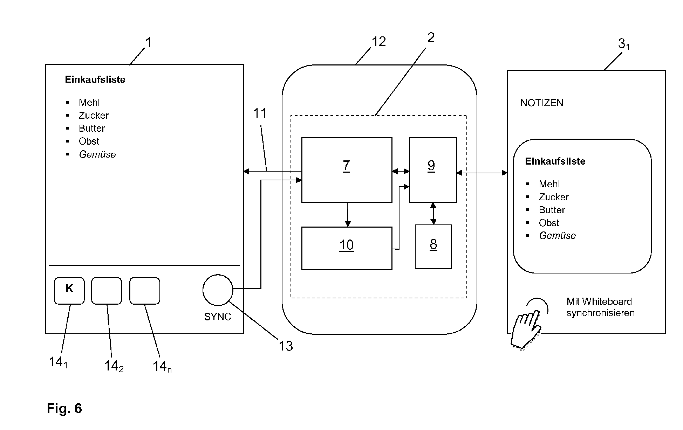

Durch die Fig. 6 ist eine weitere Funktion des Systems verdeutlicht. Der Nutzer kann seine Notizen oder seine Kalenderfunktion oder andere mit dem Whiteboard gekoppelte Funktionen mit diesem synchronisieren. In dem hier gezeigten Beispiel ergänzt der Nutzer seine Einkaufsliste auf dem Notizblock im Smartphone oder auf seinem Tablet oder im PC und kann durch eine Synchronisierfunktion die auf dem Whiteboard vorhandene Liste ergänzen. Das Ausführungsbeispiel zeigt, wie die Liste auf dem Endgerät 3₁ (zum Beispiel Smartphone) mit dem Wort "Gemüse" ergänzt wird, und nach Betätigen des Synchronisierbuttons, der Listeneintrag auf der Tafel 1 des Whiteboards erscheint, also die Liste auf der Tafel 1 des Whiteboards ebenfalls automatisch um den Listeneintrag "Gemüse" ergänzt wird.

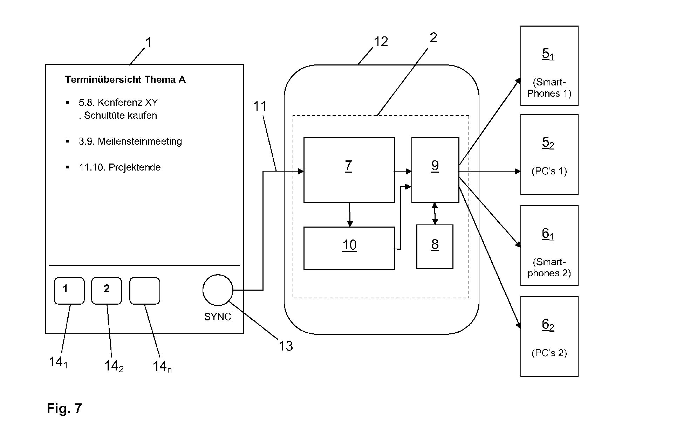

Die Fig. 7 zeigt ein weiteres Anwendungsbeispiel, welches mit dem Prinzip des in Fig. 4 dargestellten Beispiels korrespondiert. Im Unterschied dazu zeigt dieses Ausführungsbeispiel die Möglichkeit, den Inhalt auch an verschiedene Nutzergruppen und deren Mitglieder zu verschicken. In dem Beispiel wird gezeigt, dass der Inhalt an alle Mitglieder einer 1. Gruppe und an alle Mitglieder einer 2. Gruppe beziehungsweise deren Endgeräte 5₁, 5₂, 6₁, 6₂ übermittelt wird. Die Mitglieder einer Gruppe und die zugehörigen Endgeräte 5₁, 5₂, 6₁, 6₂ dieser Mitglieder lassen sich im Registrierungsprozess im Vorfeld festlegen. Diese im Vorfeld definierten Einstellungen können aber selbstverständlich auch jederzeit editiert beziehungsweise administriert werden.

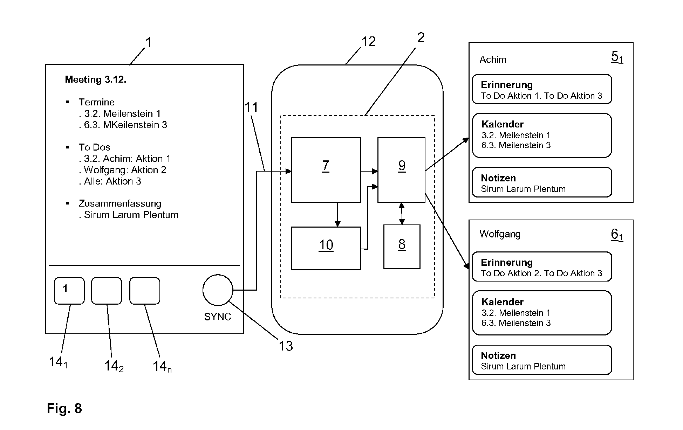

In der Fig. 8 ist ein Ausführungsbeispiel gezeigt, bei dem der Whiteboard-Inhalt verschiedene Themenbereiche umfasst. Zum einen sind dort Termine und "ToDos" ("Noch zu tun") zum anderen auch eine Zusammenfassung dargestellt. Die "ToDos" sind wiederum mit verschiedenen Namen verbunden (Achim, Wolfgang, Alle). Das Semantikmodul 7 analysiert den gesamten Inhalt des Whiteboards beziehungsweise seiner Tafel 1 und selektiert die einzelnen Themenbereiche. Außerdem ist das Semantikmodul 7 im Zusammenwirken mit dem hier als Nutzer- und Geräteverwaltung fungierenden Verwaltungsmodul 8 und dem Auslieferungsmodul 9 in der Lage die Themenbereiche, welche mit entsprechenden Namen verknüpft sind, entsprechend den Namen zuzuordnen. Als Ergebnis werden dann die entsprechenden Inhalte beziehungsweise Informationen durch das Auslieferungsmodul 9 an die Endgeräte 5₁, 6₁ der vorgesehenen Empfänger übertragen. So werden beispielsweise in der Erinnerungsfunktion des Smartphones (Endgerät 5₁) von Achim nur die für ihn relevanten "ToDos" erscheinen, im Smartphone (Endgerät 6₁) des anderen Nutzers (Wolfgang) nur die für Wolfgang relevanten "ToDos". Aufgrund des Zusammenwirkens zwischen dem Semantikmodul 7, dem Auslieferungsmodul 9 und dem Verwaltungsmodul 8 ist die Computereinrichtung 2 aber auch dazu in der Lage das Wort "Alle" so zu interpretieren, dass die dazugehörige Aktion ("ToDo" / Erinnerung) an alle im Empfängerfeld selektierten Empfänger/Nutzer (Projektgruppe 1: Wolfgang, Achim) verschickt wird.

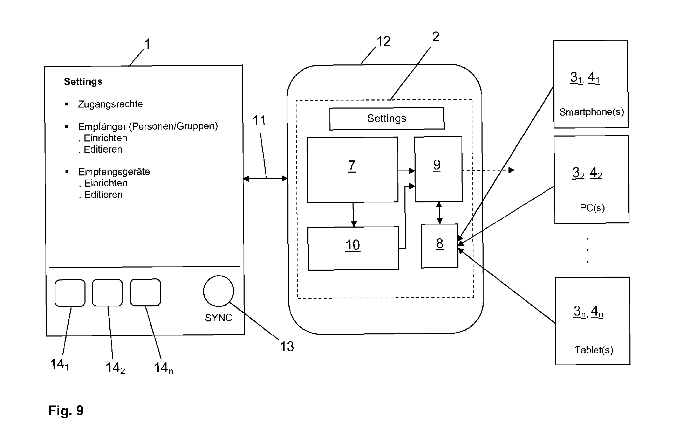

Die Fig. 9 zeigt die Prinzipdarstellung des Registrierungsprozesses, bei dem sich alle Nutzer mit ihren entsprechenden Endgeräten 3₁ - 3ₙ, 4₁ - 4ₙ am System anmelden und in dem Verwaltungsmodul 8 registriert werden. In der Fig. 9 ist zusätzlich noch eine mit "Settings" bezeichnete Einheit der Computereinrichtung 2 gezeigt, auf deren Darstellung in den anderen Figuren verzichtet wurde. In dieser Einheit werden sonstige Konfigurationseinstellungen für die Computereinrichtung 2 abgelegt.

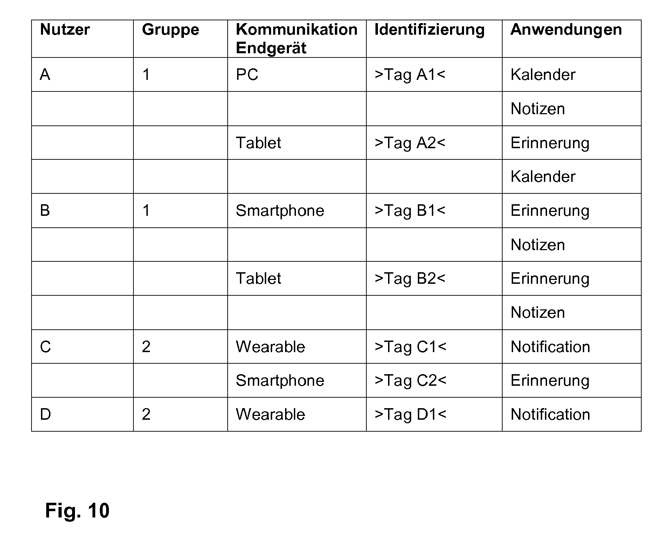

Die Fig. 10 veranschaulicht die Art und Weise, wie in der Computereinrichtung 2 Nutzer und deren Endgeräte verwaltet werden. Jeder Nutzer ist mit seinem Namen oder mit einem Aliasnamen registriert und kann bestimmten Gruppen zugeordnet werden. Des Weiteren sind die jeweiligen Endgeräte des Nutzers und die darauf ansprechbaren Applikationen registriert. Diese vorzugsweise in einer Nutzer-Datenbank gehaltenen Einträge können editiert und angepasst werden. So lassen sich beispielsweise Nutzer zu jeweils sich ändernden Gruppen zuordnen, Endgeräte sperren oder neue Nutzer in die Nutzer- und Geräteverwaltung (in das Verwaltungsmodul 8) der Computereinrichtung 2 aufnehmen.

## Patentansprüche

1. Whiteboard, mit einer handbeschreibbaren elektronischen Tafel (1) für eine zumindest visuelle Wiedergabe von Informationen und mit einer Computereinrichtung (2) zur Bereitstellung an der Tafel (1) wiedergegebener Informationen für computerbasierte Endgeräte (3₁ - 3ₙ, 4₁ - 4ₙ, 5₁ - 5ₙ, 6₁ - 6ₙ), **dadurch gekennzeichnet, dass** in die Computereinrichtung (2) ein Semantikmodul (7) zur semantischen Analyse von Informationen, ein Verwaltungsmodul (8) zur Verwaltung sich bei der Computereinrichtung (2) unter Angabe der auf ihnen ausführbaren Applikationen registrierender Endgeräte (3₁ - 3ₙ, 4₁ - 4ₙ, 5₁ - 5ₙ, 6₁ - 6ₙ) und ein Auslieferungsmodul (9) derart implementiert sind, dass durch die elektronische Tafel (1) an die Computereinrichtung (2) übertragene Informationen mittels des Semantikmoduls (7) kategorisiert und bei bestehender Verbindung zwischen der Computereinrichtung (2) und einem bei ihr registrierten Endgerät (3₁ - 3ₙ, 4₁-4ₙ, 5₁ - 5ₙ, 6₁ - 6ₙ) mittels des Auslieferungsmoduls (9) jeweils entsprechend ihrer Kategorie unmittelbar an die gemäß Eintrag in dem Verwaltungsmodul (8) auf diesem Endgerät (3₁ - 3ₙ, 4₁ - 4ₙ, 5₁ - 5ₙ, 6₁ - 6ₙ) ansprechbaren, die jeweilige Kategorie von Informationen bei ihrer Ausführung verwendenden Applikationen übergeben werden.

2. Whiteboard nach Anspruch 1, **dadurch gekennzeichnet, dass** die Computereinrichtung (2) einen Annotationsspeicher (10) umfasst, in welchem die von dem Semantikmodul (7) kategorisierten Informationen unter Zuordnung zumindest der für sie jeweils festgelegten Kategorie zum Zweck eines späteren Auslesens durch das Auslieferungsmodul (9) abgelegt werden.

3. Whiteboard nach Anspruch 1 oder 2, **dadurch gekennzeichnet, dass** in die Computereinrichtung (2) eine Nutzerverwaltung als Teil des Verwaltungsmoduls (8) oder als eigenständiges Modul implementiert ist.

4. Whiteboard nach einem der Ansprüche 1 bis 3, **dadurch gekennzeichnet, dass** die Computereinrichtung (2) des Whiteboards von dessen elektronischer Tafel (1) abgesetzt ausgebildet ist, aber mit dieser zumindest temporär über ein Netzwerk (11) verbunden ist.

5. Whiteboard nach Anspruch 4, **dadurch gekennzeichnet, dass** die Computereinrichtung (2) des Whiteboards als Teil eines Cloudsystems (12) im Internet ausgebildet ist und eine Internetzugangseinrichtung Bestandteil der elektronischen Tafel (1) oder mit dieser über eine Netzwerkkarte der elektronischen Tafel (1) verbindbar ist.

6. Whiteboard nach Anspruch 1 oder 4, **dadurch gekennzeichnet, dass** dessen elektronische Tafel (1) ein oder mehrere Bedienelementelemente (13, 14₁ - 14ₙ) aufweist, wobei ein Bedienelement (13) vorgesehenen ist, bei dessen Betätigung die augenblicklich von der elektronischen Tafel (1) wiedergegebenen Informationen an die Computereinrichtung (2) übertragen werden und/oder wobei, im Falle einer in die Computereinrichtung (2) implementierten Nutzerverwaltung, mindestens ein Bedienelement (14₁ - 14ₙ) vorgesehen ist, mittels welchem festlegbar ist, für die Endgeräte (3₁ - 3ₙ, 4₁ - 4ₙ, 5₁ - 5ₙ, 6₁ - 6ₙ) welches Nutzers augenblicklich an der Tafel (1) wiedergegebene Informationen bereitgestellt werden.

7. Whiteboard nach Anspruch 1 oder 4, **dadurch gekennzeichnet, dass** dessen elektronische Tafel (1) ein handbeschreibbares elektronisches Display aufweist.

8. Whiteboard nach Anspruch 7, **dadurch gekennzeichnet, dass** es sich bei dem elektronischen Display um einen Touchscreen, nämlich um ein berührungsempfindliches Display handelt.

9. Whiteboard nach Anspruch 1 oder 7, **dadurch gekennzeichnet, dass** dessen elektronische Tafel (1) zur Wiedergabe von Videoinformationen ausgebildet ist.

10. Whiteboard nach Anspruch 1 oder 4, **dadurch gekennzeichnet, dass** dessen elektronische Tafel (1) über mindestens ein Mikrophon zu Entgegennahme akustischer Informationen verfügt.

11. Whiteboard nach Anspruch 10, **dadurch gekennzeichnet, dass** dessen elektronische Tafel (1) oder seine Computereinrichtung (2) über eine Sprachverarbeitungseinheit, zur Umsetzung mittels des Mikrophons entgegengenommener Sprache in Text verfügt.

12. Whiteboard nach Anspruch 1 oder 10, **dadurch gekennzeichnet, dass** dessen elektronische Tafel (1) über mindestens einen Lautsprecher zur Ausgabe akustischer Informationen verfügt.

13. Whiteboard nach einem der Ansprüche 1 bis 12, **dadurch gekennzeichnet, dass** dessen Computereinrichtung (2) zur Entgegennahme von Informationen von dazu berechtigten, mit ihr verbundenen elektronischen Endgeräten (3₁3ₙ, 4₁ - 4ₙ, 5₁ - 5ₙ, 6₁ - 6ₙ) und zu deren Weiterleitung für eine Wiedergabe durch die elektronische Tafel (1) ausgebildet ist.

14. Verfahren zur Bereitstellung von auf einer handbeschreibbaren elektronischen Tafel (1) eines Whiteboards wiedergegebenen Information für computerbasierte Endgeräte (3₁ - 3ₙ, 4₁ - 4ₙ, 5₁ - 5ₙ, 6₁ - 6ₙ), **dadurch gekennzeichnet, dass** die durch die elektronische Tafel (1) wiedergegebenen Informationen an eine Computereinrichtung (2) des Whiteboards übertragen werden und mittels eines in diese Computereinrichtung (2) implementierten Semantikmoduls (7) eine semantischen Analyse erfolgt, in deren Ergebnis die Informationen kategorisiert werden und dass bei bestehender Verbindung zwischen der Computereinrichtung (2) und einem bei einem Verwaltungsmodul (9) der Computereinrichtung (2) unter Angabe der auf ihm ausführbaren Applikationen registrierten Endgerät (3₁ - 3ₙ, 4₁ - 4ₙ, 5₁ - 5ₙ, 6₁ - 6ₙ) Informationen entsprechend ihrer Kategorie unmittelbar an die jeweilige Kategorie von Informationen bei ihrer Ausführung verwendende, gemäß Eintrag in dem Verwaltungsmodul (8) auf diesem Endgerät (3₁ - 3ₙ, 4₁-4ₙ, 5₁ - 5ₙ, 6₁ - 6ₙ) ansprechbare Applikationen übergeben werden.

15. Verfahren nach Anspruch 14, **dadurch gekennzeichnet, dass** die durch das Semantikmodul (7) kategorisierten Informationen unter Zuordnung der für sie jeweils festgelegten Kategorie in einem Annotationsspeicher (10) der Computereinrichtung (2) abgelegt werden, in welchem auch zu einem früheren Zeitpunkt über die elektronische Tafel (1) wiedergegebene Inhalte als kategorisierte Informationen gespeichert bleiben, wobei zu den jeweiligen Informationen neben der Kategorie das Datum ihrer Wiedergabe an der elektronischen Tafel (1) als Annotation vermerkt wird und wobei kategorisierte Informationen durch das Auslieferungsmodul (9) entweder direkt vom Semantikmodul (7) weitergeleitet oder aus dem Annotationsspeicher (10) ausgelesen und entsprechend ihrer Kategorie unmittelbar an Applikationen eines mit der Computereinrichtung (2) verbundenen Endgerätes (3₁ - 3ₙ, 4₁ - 4ₙ, 5₁ - 5ₙ, 6₁ - 6ₙ) übergeben werden.

16. Verfahren nach Anspruch 15, **dadurch gekennzeichnet, dass** in dem Annotationsspeicher (10) Angaben dazu vermerkt werden, wann und durch welches elektronische Endgerät (3₁ - 3ₙ, 4₁ - 4ₙ, 5₁ - 5ₙ, 6₁ - 6ₙ) eine Information von der Computereinrichtung (1) des Whiteboards abgerufen wird.
